# EUROPÄISCHE PATENTSCHRIFT

(11) **EP 0 899 601 B1**
(45) Veröffentlichungstag und Bekanntmachung des Hinweises auf die Patenterteilung: **07.01.2004**
(21) Anmeldenummer: 98113998.3
(22) Anmeldetag: 27.07.1998
(51) Int. Cl.: G02C 1/02

(54) **Brillenglashalterung**
Ophthalmic lens-mounting support
Support de lentilles ophthalmiques

(30) Priorität: 29.07.1997 DE 19732667
(43) Veröffentlichungstag der Anmeldung: 03.03.1999
(73) Patentinhaber: Geyer, Joachim, 85435 Erding (DE)
(72) Erfinder: Geyer, Joachim, 85435 Erding (DE)
(74) Vertreter: Reinhardt, Markus, Dipl.-Ing.

(56) Entgegenhaltungen:
- EP-A- 0 601 849
- EP-A- 0 661 575
- EP-A- 0 666 490
- WO-A-96/33438
- WO-A-97/21133
- US-A- 2 680 847
- US-A- 4 502 765

## Beschreibung

Die vorliegende Erfindung betrifft im allgemeinen eine Halterung für ein Brillenglas, und insbesondere eine Brillenglashalterung gemäß dem Oberbegriff des Patentanspruches 1.

Aus dem Stand der Technik sind diverse Brillenglashalterungen für rahmenlose Brillen bekannt, die im folgenden kurz dargestellt werden und die alle gemeinsam haben, daß die Konstruktion aufwendig ist, die Einzelteile kompliziert in der Herstellung sind und daß die Montage der Einzelteile fehleranfällig ist.

Derartige Brillenglashalterungen werden zum Beispiel in der Patentanmeldungen WO 96/33 438, EP 0 666 490 A und EP 0 601 849 A beschrieben.

So ist beispielsweise eine Anordnung bekannt, bei der am Rande eines Brillenglases, im Bereich des seitlichen Brillenbügels, ein Paar von Schrauben vorgesehen ist, die beide das Brillenglas durchdringen und die gemeinsam über ein oder zwei Brückenglieder mit dem seitlichen Brillenbügel in Verbindung stehen. Durch die Anordnung zweier Schrauben, die beabstandet zueinander das Brillenglas mittels jeweils einer zugehörigen Mutter fixieren, soll ein Verdrehen des Brillenbügels relativ zum Brillenglas verhindert werden.

Eine andere bekannte Halterung für ein Brillenglas umfaßt zwar nur eine Schraube, die das Brillenglas im Randbereich durchdringt und ebenfalls mittels einer Mutter fixiert, jedoch ist zur Sicherung gegen Verdrehung eine Kerbe im Rand des Brillenglases eingeschliffen. In diese Kerbe ist ein Sicherungsstift formgenau eingesetzt, wobei dieser Sicherungsstift ebenso wie die eine Schraube mit dem Brillenbügel fest verbunden ist. Durch diese Anordnung aus Schraube und Sicherungsstift wird das Brillenglas an zwei Punkten relativ zum Brillenbügel gehalten und ein Verdrehen des Brillenglases vermieden.

Im Stand der Technik sind somit Lösungen vorgesehen, die zwar ein Verdrehen des Brillenglases relativ zum Brillenbügel verhindern, die jedoch durch die Anordnung von mindestens zwei Fixierungspunkten eine positionsgenaue Fertigung und Montage erfordern. Der Aufbau der bekannten Anordnungen ist vielteilig und somit teuer in der Herstellung.

Demgegenüber ist es die Aufgabe der Erfindung, eine möglichst einfache Halterung für ein Brillenglas zu schaffen, wobei nur ein Befestigungspunkt vorgesehen sein soll und trotzdem eine hohe Verdrehsicherheit des Brillenglases relativ zu dem Brillenbügel gegeben ist.

Diese Aufgabe wird durch eine Brillenglashalterung gelöst, die die Merkmale gemäß dem kennzeichnenden Teil des Patentanspruches 1 aufweist.

Erfindungsgemäß ist die Brillenglashalterung dadurch gekennzeichnet daß eine Eingriffseinrichtung an der Brillenglashalterung zur verdrehsicheren Fixierung eines Brillenglases mit diesem einen Formschluß herstellt, wobei die Eingriffseinrichtung in die Oberfläche des Brillenglases einschneidet.

Hierdurch wird ein formschlüssiger Eingriffszustand zwischen der Brillenglashalterung und dem Brillenglas auf einfachste Art und Weise und ohne zusätzliche Bauteile hergestellt.

Vorteilhafte Weiterbildungen der Brillenglashalterung sind in den Unteransprüchen 2 bis 13 angeführt.

Nach Patentanspruch 2 zeichnet sich die Brillenglashalterung dadurch aus, daß an der Brillenglashalterung als Eingriffseinrichtung zumindest eine Schneideinrichtung vorgesehen ist. Die Ausführungsform mit einer oder mehreren Schneideinrichtungen ist besonders einfach herzustellen und damit kostengünstig. Durch mehrere Schneideinrichtungen wird der Widerstand vergrößert, den die Schneiden, d.h. die Eingriffselemente zwischen dem Brillenglas und der Brillenglashalterung, einer von außen aufgebrachten (Verdreh-) Kraft entgegenbringen.

In einer bevorzugten Ausführungsform nach Patentanspruch 3 besteht die Brillenglashalterung im wesentlichen aus einer Schraube und aus einer Schraubenmutter. Durch diese Ausbildung läßt sich die für die Herstellung des Eingriffes erforderliche Kraft unter Ausnutzung der Hebelwirkung des Schraubgewindes zwischen der Schraube und der Schraubenmutter einfach aufbringen bzw. erzeugen.

Nachdem die Eingriffs- bzw. Schneideinrichtung in einen formschlüssigen Eingriffszustand mit dem Brillenglas gebracht ist und hierfür eine lineare Bewegung der Eingriffselemente bzw. der Schneidelemente ausreichend ist, ist nach Patentanspruch 4 die Schraube in einer Bohrung durch das Brillenglas eingesetzt, wobei die Schneideinrichtung auf der dem Brillenglas zugewandten Seite eines Schraubenkopfes der Schraube ausgebildet ist, so daß bei einem Anziehen der Schraubenmutter die Schraube flächig an das Brillenglas angepreßt wird und hierdurch die Schneideinrichtung in die Oberfläche des Brillenglases eindringt bzw. sich darin einschneidet.

Um unterschiedlich dicke Brillengläser oder auch Brillengläser mit sich ändernder Dicke durch die erfindungsgemäße Brillenglashalterung fassen zu können, umfaßt nach Patentanspruch 5 die Brillenglashalterung weiterhin eine Beilagscheibe auf der Seite der Schraubenmutter, wobei nach Patentanspruch 6 die Beilagscheibe einen sich verändernden Dickenquerchnitt aufweist, um Dickenänderungen des Brillenglases auszugleichen.

Das größte Widerstandsmoment setzt die Brillenglashalterung einer von außen aufgebrachten (Verdreh-) Kraft entgegen, wenn die Eingriffs- bzw. Schneideinrichtung am Umfang der Brillenglashalterung vorgesehen ist. Dann ist der Hebel zwischen dem Drehpunkt bzw. Ansatzpunkt der Brillenglashalterung und der Eingriffs- bzw. Schneideinrichtung, die durch den Eingriff mit dem Brillenglas das Widerlager bildet, am größten.

Um eine Beschädigung des Brillenglases so gering wie möglich zu halten, ist es nach Patentanspruch 8 ausreichend, wenn die Eingriffs- bzw. Schneideinrichtung (en) eine Höhenerstreckung von etwa 2/10 mm aufweisen.

In Übereinstimmung mit dem Patentanspruch 9 ist die Brillenglashalterung vorzugsweise aus V2A-Stahl gefertigt, wodurch eine ausreichende Festigkeit und Elastizität erreicht ist.

Die Anbringung der Brillenbügel an der erfindungsgemäßen Brillenglashalterung erfolgt nach Patentanspruch 10 entweder durch Anlöten oder durch Anschrauben.

Bei einer Brillenglashalterung nach Anspruch 11 ist die Eingriffseinrichtung bevorzugt als eine polygonalförmige Erhebung vorgesehen, die einen formschlüssigen Eingriffszustand zwischen dem Brillenglas und der Brillenglashalterung herstellt, wobei die entsprechende Vertiefung in der Oberfläche des Brillenglases vorgesehen ist.

Die Form der vorstehend erwähnten Erhebung ist nicht notwendigerweise polygonal bzw. vieleckig, sondern kann jede Form aufweisen, die ein Verdrehen zwischen der Brillenglashalterung und dem Brillenglas verhindert, also etwa auch oval, trapezförmig usw. sein.

Der Schutzumfang ergibt sich aus den zugehörigen Patentansprüchen, wobei zum besseren Verständnis der vorliegenden Erfindung im folgenden einige Ausführungsformen beschrieben sind.

In den Zeichnungen zeigt:
Fig. 1 eine schematische und stark vergrößerte Teilquerschnittansicht einer erfindungsgemäßen Brillenglashalterung entlang der Linie A in der Figur 2;
Fig. 2 eine Aufsicht auf die Brillenglashalterung von der Seite einer Schneideinrichtung her gesehen;
Fig. 3 eine weitere Aufsicht auf die Brillenglashalterung von der Seite eines Schraubenkopfes her gesehen;
Fig. 4 eine weiter vergrößerte schematische Darstellung der Schneideinrichtung der Brillenglashalterung;
Fig. 5 eine schematische Ansicht einer Brille mit einer erfindungsgemäßen Brillenglashalterung 2;
Fig. 6 eine schematische Querschnittansicht einer Brillenglashalterung 2 im Falle eines Brillenglases 1 mit sich ändernder Dicke; und
Fig. 7 eine Querschnittdarstellung einer zweiten Ausführungsform der vorliegenden Erfindung.

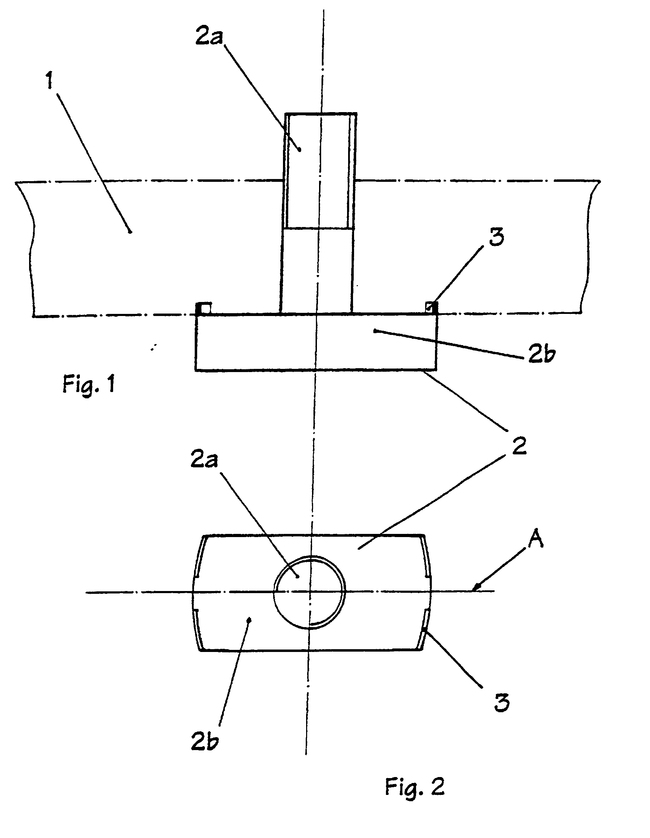

Die schematische Darstellung in der Figur 1 zeigt ausschnittsweise ein Brillenglas 1 aus einem weichen und zähen Kunststoff, so wie er seit kurzer Zeit auf dem Markt verfügbar ist. In der Figur 1 ist ein Brillenbügel, wie er zum Tragen eine Brille vorgesehen ist, nicht dargestellt. Jedoch wird ein solcher Brillenbügel an der Brillenglashalterung 2 mittels üblicher Verfahren befestigt. Zum Beispiel kann der Brillenbügel in der Figur 1 an der flach ausgebildeten Unterseite der Brillenglashalterung 2 angelötet sein.

Die erfindungsgemäße Brillenglashalterung 2 dient dazu, das Brillenglas 1 mittels möglichst weniger Befestigungspunkte mit dem Brillenbügel bzw. den Brillenbügeln zu verbinden, wie beispielsweise für rahmenlose Kunststoffgläser erforderlich. Im gezeigten Ausführungsbeispiel ist nur eine einzige Brillenglashalterung 2 vorgesehen, um die Verbindung zwischen dem Brillenglas 1 und dem Brillenbügel herzustellen. Um eine hohe Verdrehsicherheit zwischen dem Brillenglas 1 und dem Brillenbügel zu erreichen, sind in Übereinstimmung mit der vorliegenden Erfindung die folgenden Maßnahmen ergriffen.

An der dem Brillenglas 1 zugewandten Seite sind an der im Ausführungsbeispiel als Schraube ausgebildeten Brillenglashalterung 2 eine oder mehrere Scheideinrichtungen 3 (Eingriffseinrichtungen) vorgesehen, die in Eingriff mit dem Brillenglas 1 gelangen. Die als Schraube ausgebildete Brillenglashalterung 2 weist einen Schraubenkopf 2b auf sowie einen zylindrischen Schraubenschaft, der ein Schraubengewinde 2a (Außengewinde) umfaßt. Der Schraubenkopf 2b ist, wie es aus der Figur 2 ersichtlich ist, an den zwei gegenüberliegenden unteren und oberen Seitenabschnitten gerade ausgebildet und an den beiden linken und rechten Seitenabschnitten kreisabschnittsförmig ausgebildet. Im Bereich der beiden kreisabschnittsförmigen Seitenabschnitte sind die Schneideinrichtungen 3 angeordnet, die sich entlang der Umfangskante nach oben erstrecken (Figur 1).

Wird im gezeigten Ausführungsbeispiel die Brillenglashalterung 2 in eine Bohrung im Brillenglas 1 eingesetzt, so kommen die Schneideinrichtungen 3 mit ihren freien Kanten mit der Oberfläche des Brillenglases 1 in Kontakt. Wird dann eine Schraubmutter (in den Figuren 1 und 2 nicht dargestellt) auf das Schraubengewinde 2a aufgeschraubt, erforderlichenfalls mit einer Beilagscheibe, so wird, nachdem die Schraubmutter mit der Oberfläche des Brillenglases 1 in Anlage kommt, eine Zugkraft auf den Schraubenkopf 2b ausgeübt. Infolge dieser Zugkraft werden die Schneideinrichtungen 3 in die Oberfläche des Brillenglases 1 eindringen, bis der Schraubenkopf 2b flächig an dem Brillenglas 1 anliegt.

Um ein Verdrehen des Schraubenkopfes 2b während des Anziehens der Schraubenmutter zu verhindern, ist es vorteilhaft, den Schraubenkopf festzulegen, entweder durch ein geeignetes Werkzeug oder durch eine spezielle Schablone, die der Form des Schraubenkopfes 2b angepaßt ist.

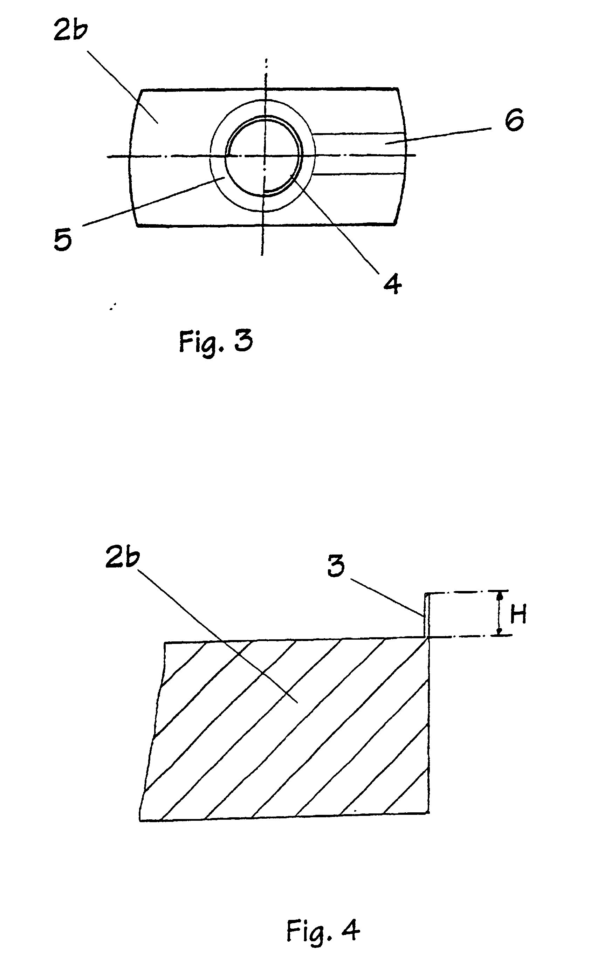

Die Höhe H (siehe Figur 4) der Schneideinrichtung 3 beträgt vorzugweise 2/10 mm, kann jedoch je nach den Eigenschaften des für das Brillenglas 1 verwendeten Kunststoffes auch geringer oder höher ausgebildet sein.

In der Figur 2 ist eine vierteilige Schneideinrichtung 3 gezeigt, deren Querschnitt im wesentlichen konstant ausgebildet ist.

Da die Anzahl und die Form der Eingriffs- bzw. Schneideinrichtungen 3 letztlich nur durch die Funktion bestimmt ist, können auch andere Formen der Eingriffs- bzw. Schneideinrichtung 3 vorgesehen werden. Ausschlaggebend für die Form und Anzahl der Eingriffs- bzw. Schneideinrichtungen 3 ist, daß sich die Eingriffs- bzw. Schneideinrichtungen 3 bei einem Anziehen der Schraubenmutter leicht in den Kunststoff des Brillenglases 1 einschneiden bzw. einarbeiten und anschließend einer Verdrehung der Brillenglashalterung 2 einen möglichst großen Widerstand entgegensetzen. Denkbar ist als Alternative zum Schneiden zur Herstellung der Formschlüssigkeit auch eine Wärmebehandlung, so daß durch kurzzeitiges und örtlich begrenztes Erwärmen eine Formgebung im Bereich der Brillenglashalterung erzielt wird, die letztendlich einen Formschluß zwischen dem Kunststoffglas und der Brillenglashalterung erzielt.

Die bevorzugt eingesetzten Schneideinrichtungen 3 sind in dem Ausführungsbeispiel nach der Figur 2 vierteilig ausgebildet, so daß sich mehrere Schneidkanten ergeben, die ein Einschneiden in den Kunststoff beim Anziehen der Schraubenmutter erleichtern.

Wie oben bereits erwähnt, kann ein Brillenbügel an der flachen Unterseite der Brillenglashalterung 2 angelötet werden. In der Figur 3 ist eine weitere Ausführungsform der erfindungsgemäßen Brillenglashalterung 2 dargestellt, bei der ein Brillenbügel mittels einer weiteren Verschraubung an der Brillenglashalterung 2 angebracht werden kann.

Hierzu ist in der dem Schraubengewinde 2a abgewandten Seite des Schraubenkopfes 2b eine kreisförmige Vertiefung 5 (Sackbohrung) vorgesehen, in der wiederum eine weitere, im Durchmesser kleinere Sackbohrung mit einem Innengewinde 4 angeordnet ist. Eine längliche Nut 6 stellt eine Vertiefung bereit, in der ein länglicher Abschnitt eines Brillenbügels derart einlegbar ist, daß eine am Ende des Brillenbügels vorgesehene Öse (nicht dargestellt) in die kreisförmige Vertiefung 5 einbringbar ist. Durch diese Öse an dem Brillenbügel wird eine Schraube (nicht dargestellt) in das Gewinde 4 eingeschraubt und somit eine Fixierung zwischen der Brillenglashalterung 2 und dem Brillenbügel erreicht.

Je nach Form des Brillenbügels lassen sich auch andere Formen der Vertiefung 5 und der Nut 6 an dem Schraubenkopf 2b der Brillenglashalterung 2 vorsehen.

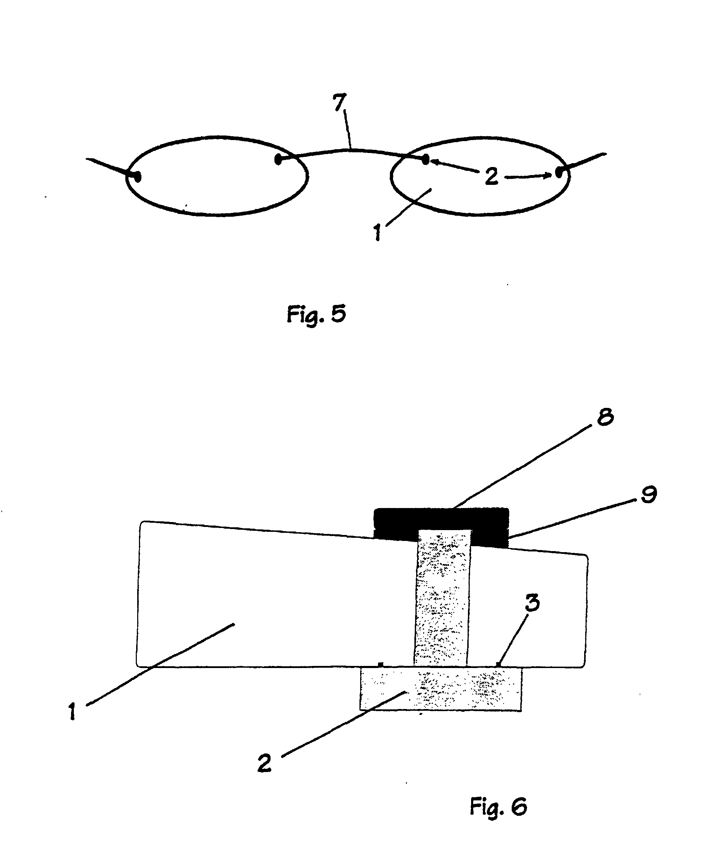

Wie es aus der Darstellung in der Figur 5 zu ersehen ist, ist die erfindungsgemäße Brillenhalterung 2 im Verhältnis zu normal großen Brillengläsern 1 äußerst klein, d.h. daß der Durchmesser bzw. die Längs- und Quererstreckung des Schraubenkopfes 2b etwa 4 bis 6 mm beträgt, während das Schraubgewinde 2a etwa 2 mm im Durchmesser beträgt. Ein Bügel 7, wie er als Verbindungselement zwischen den beiden Brillengläsern 1 vorgesehen ist, wird auf der Seite des Schraubenkopfes 2b der Brillenglashalterung 2 fixiert. Ebenso werden die seitlichen Brillenbügel an den dafür vorgesehenen seitlichen Brillenglashalterungen 2 befestigt. Durch die erfindungsgemäßen Schneideinrichtungen 3 an der Unterseite des Schraubenkopfes 2b wird eine verdrehsichere Befestigung der Brillenbügel relativ zum Brillenglas 1 mittels der Brillenhalterungen 2 an nur einem Befestigungspunkt geschaffen.

Nachdem die Brillengläser 1 für die unterschiedlichsten Sehfehler von Personen vorzusehen sind, können auch Brillengläser zum Einsatz kommen, deren Dicke sich ändert. Diese Dickenänderung kann, wie es in der Figur 6 gezeigt ist, durch eine entsprechend ausgebildete Beilagscheibe 9 ausgeglichen werden. Um eine flächige Anlage des Schraubenkopfes 2b der Brillenglashalterung 2 an der Seite der Schneideinrichtungen 3 am Brillenglas 1 zu gewährleisten, wird auf der Seite der Schraubenmutter 8 eine sich in der Dicke ebenfalls ändernde Beilagscheibe 9 eingelegt.

Wie es der Figur 6 ebenfalls zu entnehmen ist, müssen die Schneideinrichtungen 3 nicht am Umfangsrand des Schraubenkopfes 2b angeordnet sein, so wie es in den Figuren 1, 2 und 4 dargestellt ist, sondern können auch im Innenbereich des Schraubenkopfes 2b, d. h. beabstandet vom Umfang angeordnet sein.

Schließlich ist die Brillenglashalterung 2 vorzugsweise aus einem hochfesten Material, wie etwa V2A-Stahl gefertigt. Jedoch sind auch andere Materialien für die Brillenglashalterung 2 denkbar, sofern diese die erforderlichen Festigkeitseigenschaften aufweisen und sich die erfindungsgemäßen Eingriffs- bzw. Schneideinrichtungen 3 anformen bzw. daran ausbilden lassen.

In den gezeigten Ausführungsbeispielen ist als Brillenglashalterung 2 eine Schrauben-Mutter-Konstruktion vorgesehen. Andere Anordnungen, die aus zumindest einem Bauteil bestehen, welches die Schneideinrichtungen 3 aufnimmt und welches an dem Brillenglas 1 so festlegbar ist, daß eine hohe Verdrehsicherheit gewährleistet ist, sind jedoch auch möglich. Beispielsweise zu nennen wäre hier eine Art von Nietenkonstruktion, wobei dann die Eingriffs- bzw. Schneideinrichtungen 3 an der Unterseite des Nietenkopfes angeordnet sind.

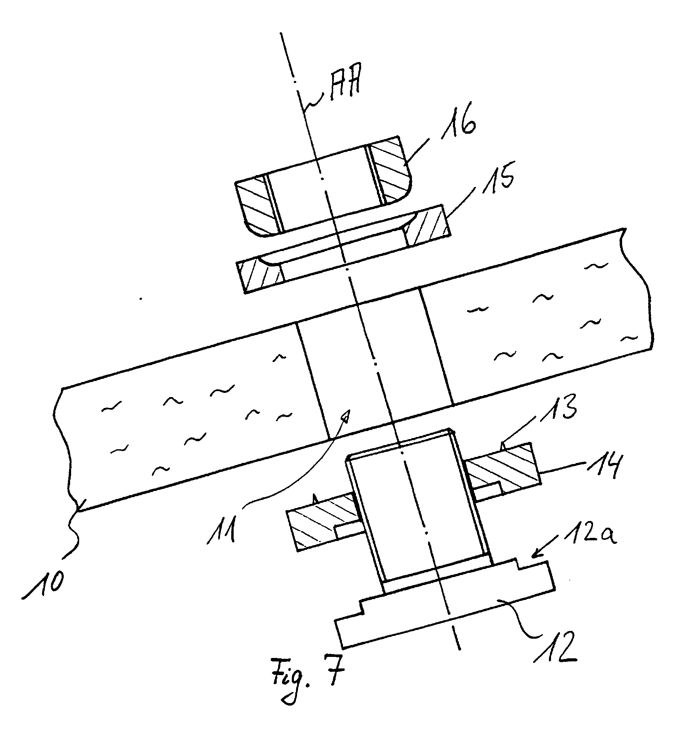

Die zweite Ausführungsform der vorliegenden Erfindung wird anhand der Figur 7 beschrieben.

Dort ist mit 10 ein Brillenglas bezeichnet, welches eine Durchgangsöffnung 11 aufweist. Diese Durchgangsöffnung 11 durchgreift der Schaft einer Schraube 12, die einen vorzugsweise flachen und glatten Schraubenkopf umfaßt der eine abgestufte Seite aufweist, die in der gezeigten Ausführungsform auf der Seite des Glases 10 und mit einer dazwischen angeordneten Scheibe 14 angeordnet ist. Die Abstufung 12a kann in eine entsprechende Vertiefung in der Scheibe 14 eingreifen. An der dem Glas 10 gegenüberliegenden Seite der Scheibe 14 sind Scheideinrichtungen 13 ausgebildet, die ähnlich wie bei der ersten Ausführungsform vorgesehen sind, um die Verdrehsicherung zu erreichen.

Auf der anderen Seite des Glases 10, in der Figur 7 oberhalb des Glases 10, sind eine weitere Scheibe 15 und eine Mutter 16 vorgesehen. Um einen Winkel-Ausgleich bei sich änderender Dicke des Glases 10 zu erreichen, ist an gegenüberliegenden Flächen der Mutter 16 und der Scheibe 15 eine Anlagefläche ausgebildet, die im wesentlichen sphärisch ist und die ein automatisches Ausrichten der Bauteile 12, 14, 15 und 16 entlang der Achse AA und relativ zum Glas 10 erlaubt, wenn die Schraubverbindung angezogen wird.

Die Abstufung 12a der Schraube 12 und die dazugehörige Vertiefung der Scheibe 14 sind in der Draufsicht (nicht dargestellt) vorzugsweise polygonal ausgebildet, um einen Formschluß zwischen diesen beiden Bauteilen herzustellen, so daß hierdurch eine relative Verdrehung der beiden Bauteile um die Achse AA verhindert ist.

Eine, zeichnerisch nicht dargestellte Alternative zu der vorliegenden Erfindung, zeichnet sich dadurch aus, daß die Eingriffseinrichtung als eine polygonalförmige Erhebung vorgesehen, die einen formschlüssigen Eingriffszustand zwischen dem Brillenglas und der Brillenglashalterung herstellt, wobei die entsprechende Vertiefung in der Oberfläche des Brillenglases durch beispielsweise Ausfräsen vorgesehen ist.

Die Form dieser Erhebung ist jedoch nicht notwendigerweise polygonal bzw. vieleckig, sondern kann jede beliebige Form aufweisen, die ein Verdrehen zwischen der Brillenglashalterung und dem Brillenglas verhindert, also etwa auch ellipsenförmig, trapezförmig, etc. sein.

Wenn zum Beispiel der in der Figur 2 gezeigte Schraubenkopf 2b als Ganzes in eine der Form des Schraubenkopfes 2b entsprechend ausgeformte Vertiefung in das Brillenglas 1 eingesetzt ist, ist damit ebenfalls eine Verdrehsicherheit der Brillenglashalterung 2 relativ zum Brillenglas 1 erreicht.

Eine Brillenglashalterung für Brillengläser ist demnach mit zumindest einer Eingriffseinrichtung (z.B. eine Schneideinrichtung oder eine Erhebung) versehen, so daß eine Fixierung der Brillengläser relativ zur Brillenhalterung und damit relativ zu einem Brillenbügel, der wiederum an der Brillenhalterung angreift, ermöglicht ist. Die Eingriffseinrichtung greift in die Oberfläche der Brillengläser derart ein, daß eine Verdrehung der Brillengläser relativ zu der Brillenglashalterung verhindert ist. In einer bevorzugten Ausführungsform ist die Brillenglashalterung als eine Schrauben-Mutter-Konstruktion ausgeführt, wobei z.B. die Schneideinrichtungen als scharfkantige Erhebungen an der Unterseite eines Schraubenkopfes, dem Brillenglas gegenüberliegend, ausgebildet sind.

## Patentansprüche

1. Brillenglashalterung (2; 12) mit einer Eingriffseinrichtung (3; 13), die zur verdrehsicheren Fixierung eines Brillenglases (1; 10) mit diesem einen Formschluß herstellt, **dadurch gekennzeichnet, daß** die Eingriffseinrichtung (3; 13) durch zumindest eine Schneideinrichtung (3; 13) gebildet ist, die in die Oberfläche des Brillenglases (1; 10) einschneidet.

2. Brillenglashalterung nach Anspruch 1, **dadurch gekennzeichnet, daß** die Schneideinrichtung (3; 13) vier Schneiden umfaßt.

3. Brillenglashalterung nach Anspruch 1 oder 2, **dadurch gekennzeichnet, daß** die Brillenglashalterung (2; 12) im wesentlichen aus einer Schraube (2; 12) und einer Schraubenmutter (8) besteht.

4. Brillenglashalterung nach Anspruch 3, **dadurch gekennzeichnet, daß** die Schraube (2; 12) in einer Bohrung durch das Brillenglas (1; 10) eingesetzt ist, wobei die Schneideinrichtung (3; 13) auf der dem Brillenglas (1; 10) zugewandten Seite eines Schraubenkopfes (2b) der Schraube (2; 12) ausgebildet ist.

5. Brillenglashalterung nach Anspruch 3 oder 4, **dadurch gekennzeichnet, daß** weiterhin eine Beilagscheibe (9) auf der Seite der Schraubenmutter (8) vorgesehen ist.

6. Brillenglashalterung nach Anspruch 5, **dadurch gekennzeichnet, daß** die Beilagscheibe (9) einen sich verändernden Dickenquerchnitt aufweist.

7. Brillenglashalterung nach einem der Ansprüche 1 bis 6, **dadurch gekennzeichnet, daß** die Eingriffseinrichtung (3; 13) am Umfang der Brillenglashalterung (2; 12) vorgesehen ist.

8. Brillenglashalterung nach einem der Ansprüche 1 bis 7, **dadurch gekennzeichnet, daß** die Eingriffseinrichtungen (3; 13) eine Höhenerstreckung von etwa 2/10 mm aufweisen.

9. Brillenglashalterung nach einem der Ansprüche 1 bis 8, **dadurch gekennzeichnet, daß** die Brillenglashalterung (2; 12) vorzugsweise aus einem V2A-Stahl gefertigt ist.

10. Brillenglashalterung nach einem der Ansprüche 4 bis 9, **dadurch gekennzeichnet, daß** an dem Schraubenkopf (2b; 12) ein Brillenbügel (7) entweder durch Anlöten oder durch Anschrauben an einem Gewinde (4) befestigt ist.

11. Brillenglashalterung nach einem der Ansprüche 1 bis 10, **dadurch gekennzeichnet, daß** zwischen einer Schraube (12) und dem Brillenglas (10) eine Scheibe (14) angeordnet ist, wobei die Eingriffseinrichtung (13) an der Scheibe (14) ausgebildet ist, sowie zwischen einer Mutter (16) und dem Brillenglas (10) eine weitere Scheibe (15) angeordnet ist.

12. Brillenglashalterung nach Anspruch 11, **dadurch gekennzeichnet, daß** die gegenüberliegenden Flächen der Schraube (12) und der Scheibe (14) abgestuft ausgebildet sind und einen vieleckigen Querschnitt aufweisen, der einen Formschluß zwischen der Schraube (12) und der Scheibe (14) herstellt.

13. Brillenglashalterung nach Anspruch 11 oder 12, **dadurch gekennzeichnet, daß** die gegenüberliegenden Flächen der Mutter (16) und der Scheibe (15) zumindest teilweise sphärisch ausgebildet sind.

## Claims

1. Spectacle lens mounting (2; 12) having an engagement device (3; 13) that produces a form-locking connection with a spectacle lens (1; 10) for fixing the latter in a twist-proof manner, **characterised in that** said engagement device (3; 13) is formed by at least one cutting device (3; 13) that cuts into the surface of said spectacle lens (1; 10).

2. Spectacle lens mounting according to claim 1, **characterised in that** the cutting device (3; 13) comprises four cutting edges.

3. Spectacle lens mounting according to claim 1 or 2, **characterised in that** said spectacle lens mounting (2; 12) consists substantially of a bolt (2; 12) and a nut (8).

4. Spectacle lens mounting according to claim 3, **characterised in that** the bolt (2; 12) is inserted in a bore through the spectacle lens (1; 10), the cutting device (3; 13) being constructed on that side of a bolt head (2b) of said bolt (2; 12) which faces towards said spectacle lens (1; 10).

5. Spectacle lens mounting according to claim 3 or 4, **characterised in that** a shim (9) is provided on the same side as the nut (8).

6. Spectacle lens mounting according to claim 5, **characterised in that** the shim (9) has a varying cross-section of thickness.

7. Spectacle lens mounting according to one of claims 1 to 6, **characterised in that** the engagement device (3; 13) is provided at the periphery of said spectacle lens mounting (2; 12).

8. Spectacle lens mounting according to one of claims 1 to 7, **characterised in that** the engagement devices (3; 13) have a vertical extension of approximately 2/10 mm.

9. Spectacle lens mounting according to one of claims 1 to 8, **characterised in that** said spectacle lens mounting (2; 12) is preferably produced from a V2A steel.

10. Spectacle lens mounting according to one of claims 4 to 9, **characterised in that** a spectacle bow (7) is fastened to the bolt head (2b; 12) either by soldering-on or by screwing onto a thread (4).

11. Spectacle lens mounting according to one of claims 1 to 10, **characterised in that** a washer (14) is disposed between a bolt (12) and the spectacle lens (10), the engagement device (13) being constructed on said washer (14) and a further washer (15) being disposed between a nut (16) and said spectacle lens (10).

12. Spectacle lens mounting according to claim 11, **characterised in that** the opposing faces of the bolt (12) and washer (14) are of stepped construction and have a polygonal cross-section that produces a form-locking connection between said bolt (12) and said washer (14).

13. Spectacle lens mounting according to claim 11 or 12, **characterised in that** the opposing faces of the nut (16) and washer (15) are of spherical construction at least in part.

## Revendications

1. Support de verre de lunettes (2 ; 12) avec un système d'engrènement (3 ; 13), qui établit pour la fixation anti-torsion d'un verre de lunettes (1 ; 10) une conjugaison de forme avec ce verre, **caractérisé en ce que** le système d'engrènement (3 ; 13) est formé par au moins un système de coupe (3 ; 13) qui s'enfonce en coupant dans la surface du verre de lunettes (1 ; 10).

2. Support de verre de lunettes selon la revendication 1, **caractérisé en ce que** le système de coupe (3 ; 13) comprend quatre lames.

3. Support de verre de lunettes selon la revendication 1 ou 2, **caractérisé en ce que** le support de verre de lunettes (2 ; 12) Comprend essentiellement une vis (2 ; 12) et un écrou (8).

4. Support de verre de lunettes selon la revendication 3, **caractérisé en ce que** la vis (2 ; 12) est insérée dans un perçage à travers le verre de lunettes (1 ; 10), le système de coupe (3 ; 13) étant réalisé sur le côté, tourné vers le verre de lunettes (1 ; 10), d'une tête de vis (2d) de la vis (2 ; 12).

5. Support de verre de lunettes selon la revendication 3 ou 4, **caractérisé en ce qu'**il est prévu également une rondelle de compensation (9) sur le côté de l'écrou (8).

6. Support de verre de lunettes selon la revendication (5), **caractérisé en ce que** la rondelle de compensation (9) présente une section d'épaisseur variable.

7. Support de verre de lunettes selon l'une quelconque des revendications 1 à 6, **caractérisé en ce que** le système d'engrènement (3; 13) est prévu sur le pourtour du support de verre de lunettes (2; 12).

8. Support de verre de lunettes selon l'une quelconque des revendications 1 à 7, **caractérisé en ce que** les systèmes d'engrènement (3 ; 13) présente un étirement en hauteur d'environ 2/10 mm.

9. Support de verre de lunettes selon l'une quelconque des revendications 1 à 8, **caractérisé en ce que** le support de verre de lunettes (2 ; 12) est fabriqué de préférence à base d'un acier V2A.

10. Support de verre de lunettes selon l'une quelconque des revendications 4 à 9, **caractérisé en ce qu'**une branche de lunettes (7) est fixée sur la tête de vis (2b ; 12) soit par soudage soit par vissage sur un filetage (4).

11. Support de verre de lunettes selon l'une quelconque des revendications 1 à 10, **caractérisé en ce qu'**une rondelle (14) est disposée entre une vis (12) et le verre de lunettes (10), le système d'engrènement (13) étant réalisé sur la rondelle (14) et une autre rondelle (15) étant disposée entre un écrou (16) et le verre de lunettes (10).

12. Support de verre de lunettes selon la revendication 11, **caractérisé en ce que** les surfaces opposées de la vis (12) et de la rondelle (14) sont conçues de façon étagée et présentent une section polygonale, qui établit une complémentarité de forme entre la vis (12) et la rondelle (14).

13. Support de verre de lunettes selon la revendication 11 ou 12, **caractérisé en ce que** les surfaces opposées de l'écrou (16) et de la rondelle (15) sont conçues au moins partiellement avec une forme sphérique.
